# EUROPEAN PATENT SPECIFICATION

(11) **EP 2 693 037 B1**
(45) Date of publication and mention of the grant of the patent: **29.03.2017**
(21) Application number: 11862718.1
(22) Date of filing: 30.03.2011
(51) Int. Cl.: F02M 21/02, F02M 21/04, F01L 3/08, F01L 3/20, F01L 3/24

(54) **FUEL GAS SUPPLY DEVICE FOR GAS ENGINE**
BRENNGASVERSORGUNS VORRICHTUNG FÜR EINEN GASMOTOR
DISPOSITIF D'ALIMENTATION EN GAZ COMBUSTIBLE POUR MOTEUR À GAZ

(43) Date of publication of application: 05.02.2014
(73) Proprietor: Mitsubishi Heavy Industries, Ltd., Tokyo 108-8215 (JP)
(72) Inventor: ISHIDA, Michiyasu, Tokyo 108-8215 (JP); ESAKI, Minoru, Tokyo 108-8215 (JP)
(74) Representative: Hoffmann Eitle
(86) International application number: PCT/JP2011/058125
(87) International publication number: WO 2012/131956

(56) References cited:
- EP-A1- 2 264 307
- DE-A1- 19 633 260
- JP-A- 2000 516 319
- JP-A- 2003 138 917
- JP-A- 2003 138 917
- JP-A- 2011 001 864
- JP-U- S5 730 359
- US-A- 2 900 968

## Description

### TECHNICAL FIELD

The present invention relates to a fuel gas supply device for supplying a fuel gas of a gas engine into an inlet path.

### BACKGROUND ART

In a gas engine, as one example of a configuration for mixing an air flowing through an inlet path and a fuel gas, there is a configuration in which an injection nozzle is connected to a gas supply pipe, so that the fuel gas is injected through the nozzle into an inlet manifold.

In that case, the injection nozzle for the fuel gas protrudes into the inlet manifold. For this reason, the airflow in the inlet manifold is disturbed, so that the circulation resistance against the sucked air tends to increase.

In a conventional gas engine in which a fuel gas is supplied to the inlet path, as disclosed in, for example, Japanese Patent Application Laid-open No. H9-268923, a gas injection nozzle is disposed across an inlet pipe. Accordingly, the gas injection nozzle becomes a resistance against the flow of the sucked air, resulting in an increase in pumping work amount required for suction of supply air or fuel-containing supply air into a cylinder. This causes an increase in fuel consumption rate.

Thus, as shown in FIG. 5 (A) of Japanese Patent Publication No. 3653031, 01 is a cylinder head; 02 is an inlet path in the cylinder head 01; 03 is an inlet valve; and 04 is an inlet valve rod of the inlet valve 03. The inlet valve rod 04 is provided with a projection 05 having a cylindrical surface 05a larger in diameter than the inlet valve rod 04, concentric with the inlet valve rod 04, and in parallel with the inlet valve rod 04. The cylindrical surface 05a of the projection 05 is slidably fitted in a sleeve 06 fixed to the cylinder head 01 in such a manner as to protrude into the inlet path 02 in the cylinder head 01.

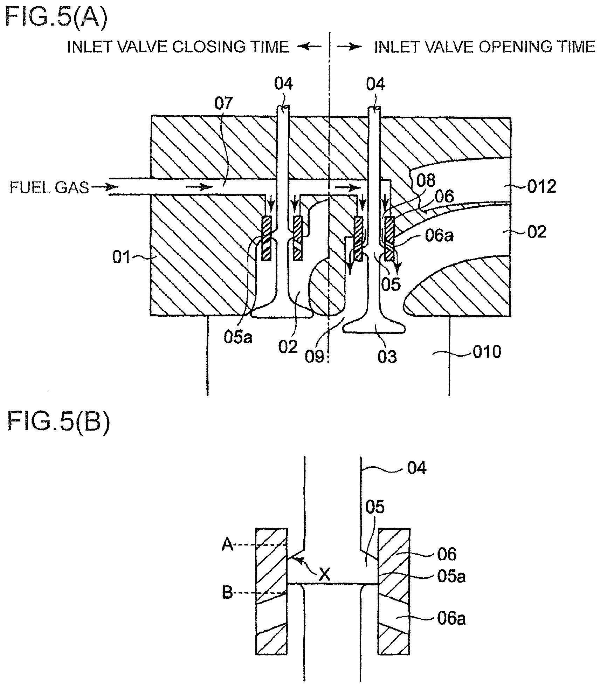

As shown in FIG. 5(B), the sleeve 06 is provided therein with a plurality of fuel gas injection holes 06a.

Then, when the inlet valve 03 is closed, the cylindrical surface 05a of the projection 05 is on the fuel gas path 07 side of the fuel gas injection hole 06a. Accordingly, the fuel gas is not injected from the fuel gas injection hole 06a into the inlet path 02.

On the other hand, when the inlet valve 03 is opened, the cylindrical surface 05a of the projection 05 moves closer to the inlet path 02 than the fuel gas injection hole 06a. Accordingly, the fuel gas from the fuel gas path 07 is injected through the fuel gas injection hole 06a into the inlet path 02. Such a technology is disclosed.

However, in accordance with the structure of Japanese Patent Publication No. 3653031, in order to allow the fuel gas to be injected into the inlet path 02, the fuel gas injection hole 06a is required to protrude from the wall surface of the inlet path 02 to the inlet path 02 side.

Therefore, the sleeve 06 is in a shape protruding into the inlet path 02, and the sleeve 06 becomes a resistance against the flow of the sucked air, resulting in an increase in pumping work amount for suction of supply air or fuel-containing supply air into a cylinder. This unfavorably causes an increase in fuel consumption rate.

JP S57 30359 U discloses a gas engine fuel gas supply device for supplying a fuel gas into an inlet path by a vertical movement of an inlet valve rod caused by opening and closing of an inlet valve. The suction hole is formed in a sleeve into which the inlet valve rodded slidably fitted. The fuel gas injection hole opening is provided in a bottom end face of the sleeve.

JP 2003 138917 A represents the closest prior art.

### DISCLOSURE OF THE INVENTION

The present invention was made in order to solve such a deficiency and it is an object to reduce the pumping work, and to improve the fuel consumption rate. This object is solved by a gas engine fuel gas supply device with the features of claim 1. According to the invention, the inner circumferential surface of a sleeve is slidably fitted with a projection, the projection being a portion of an inlet valve rod, having an outer diameter larger than the inlet valve rod, and being concentric with and in parallel with the inlet valve rod. There is provided a suction hole situated within the region of movement of the projection, and to be opened and closed in response to the movement of the inlet valve rod, and a fuel gas injection hole is formed in the bottom end face of the sleeve communicating with the suction hole. Thus, it is configured such that, when the inlet valve is at an open position, the fuel gas in the fuel gas path is injected from the bottom end face of the sleeve into the inlet path through the suction hole to the injection path. This prevents the injection path part of the fuel gas supply device from protruding from the wall surface of the inlet path. As a result, the circulation resistance against the sucked air is reduced.

In accordance with the present invention, there is provided a gas engine fuel gas supply device for supplying a fuel gas into an inlet path by a vertical movement of an inlet valve rod caused by opening and closing of an inlet valve. The device includes: a projection formed at a part in an axial direction of the inlet valve rod, and larger in an outer diameter than a vicinity thereof; a sleeve into which the projection is slidably fitted; a suction hole formed in the sleeve, and opening in an inner circumferential surface of the sleeve; and a fuel gas injection hole opening in a bottom end face of the sleeve. The device is characterized in that, in response to a downward movement of the projection of the inlet valve rod, the suction hole and the fuel gas injection hole establish communication between an inside of the sleeve and the inlet path.

With such a configuration, a part of the sleeve does not protrude into the inlet path. Accordingly, the circulation resistance against the sucked air is reduced, and the pumping work is reduced. As a result, the fuel consumption rate can be improved.

Further, in the present invention, preferably, an injection path for establishing communication between the suction hole and the fuel gas injection hole is desirably formed to be athrough hole along an axis of the sleeve in a board thickness part forming the inner circumferential surface.

With such a configuration, when the outer circumferential surface of the valve rod slides along the axis of the sleeve, the sliding contact portion with the corner part of the suction hole outer edge is only the suction hole outer edge. Accordingly, it is possible to inhibit the damages and wear of the projection outer circumferential surface.

Still further, in the present invention, preferably, the through hole of the injection path is desirably formed in a circular shape.

With such a configuration, easy formation can be achieved by drilling. Accordingly, it is possible to suppress the manufacturing cost.

Whereas, in the present invention, preferably, the injection path for establishing communication between the suction hole and the fuel gas injection hole is desirably formed in a concave groove shape in a board thickness part forming the inner circumferential surface.

With such a configuration, the inner circumferential surface side of the inlet valve rod at the concave groove-like portion is in an open state, except for the sliding contact part between the injection path and the outer circumferential surface of the projection (the valve rod axial direction length of the projection) during the operation of the inlet valve. Accordingly, the circulation resistance against the fuel gas is reduced, which produces an effect of enabling an increase in fuel supply amount.

Moreover, in the present invention, preferably, it is desirable that an opening shape of the suction hole is an ellipse shape, and that a major axis of the ellipse is tilted with respect to an axis of the sleeve.

With such a configuration, during the operation of the inlet valve, the sliding contact position between the outer circumferential surface of the projection of the inlet valve rod and the outer edge of the suction hole changes in the circumferential direction during the operation of the inlet valve. Accordingly, it is possible to inhibit the damages and wear to the outer circumferential surface.

With such a configuration, a part of the sleeve does not protrude into the inlet path. Accordingly, the circulation resistance against the sucked air is reduced, and the pumping work is reduced. As a result, the fuel consumption rate can be improved.

Further, when the outer circumferential surface of the projection of the inlet valve rod slides along the axis of the inlet valve rod, sliding contact with the corner part of the outer edge of the suction hole occurs only at the suction hole. Accordingly, it is possible to inhibit the damages and wear to the outer circumferential surface of the projection.

### BRIEF DESCRIPTION OF THE DRAWINGS

FIGS. 1(A) and 1(B) each show an essential part configuration of a fuel gas supply device for a gas engine in accordance with an embodiment of the present invention, where FIG. 1(A) shows a schematic cross-sectional view at the inlet valve closing time, and FIG. 1(B) shows a schematic cross-sectional view at the inlet valve opening time;
FIG. 2 (A) is a relative position relation view of a projection of the inlet valve and fuel gas injection holes of a sleeve of First Embodiment of the present invention, and FIG. 2(B) shows a cross-sectional arrow view along D-D of FIG. 2(A);
FIGS. 3 (A) and 3 (B) are each a view on an arrow F in FIG. 2 (A) ;
FIGS. 4 (A) and 4 (B) are each a relative position relation view of a projection of an inlet valve and fuel gas injection holes of a sleeve of Second Embodiment of the present invention, wherein FIG. 4 (B) shows a cross-sectional arrow view along E-E of FIG. 4 (A) ; and
FIGS. 5(A) in accordance with a related-art technology is a schematic cross-sectional view of an essential part configuration of a fuel gas supply device for a gas engine, and FIG. 5(B) shows a relative position relation view of a projection of an inlet valve, and fuel gas injection holes of a sleeve.

### BEST MODE FOR CARRYING OUT THE INVENTION

Below, the present invention will be described in details by way of embodiments shown in the accompanying drawings.

However, the dimensions, materials, shapes, the relative arrangement thereof, and the like described in the embodiments are, unless otherwise specified, not construed as limiting the scope of the invention only thereto, and are only mere illustrative examples.

### (First Embodiment)

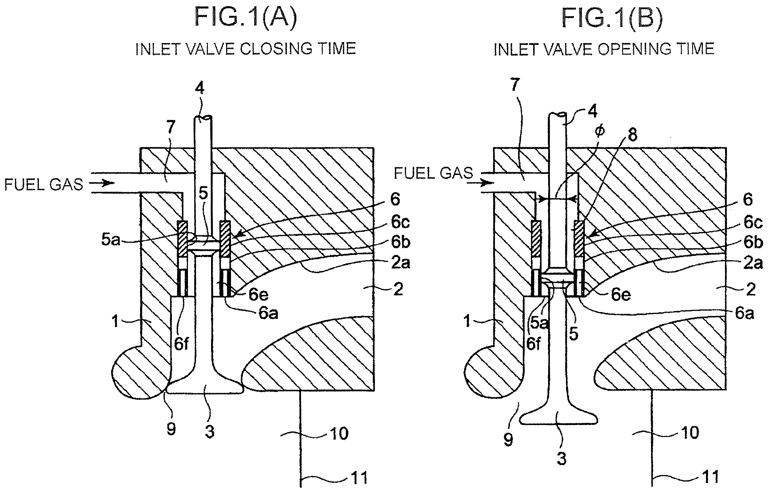

FIGS. 1(A) and 1(B) each show a schematic cross-sectional view of an essential part configuration of a fuel gas supply device of a gas engine in accordance with an embodiment of the present invention.

In FIGS. 1 (A) and 1(B), 1 is a cylinder head; 2 is an inlet path in the cylinder head 1; 3 is an inlet valve; and 4 is an inlet valve rod of the inlet valve 3. The inlet valve rod 4 is provided with a cylindrical projection 5 having a cylindrical surface 05a larger in an outer diameter than the inlet valve rod 4, concentric with the inlet valve rod 4, and in parallel with the inlet valve rod 4. The outer circumferential surface 5a of the cylindrical projection 5 is slidably fitted into a sleeve 6 fitted to the cylinder head 1 in the axial direction of the sleeve 6.

9 is an inlet port for sucking the sucked air in the inlet path 2 into a combustion chamber 10.

The opening center of the inlet port 9 is in alignment with each axis of the sleeve 6 and the inlet valve rod 4.

The combustion chamber 10 is formed by being surrounded by a cylinder 11, a piston (not shown) sliding in the vertical direction in the cylinder 11, and the cylinder head 1 closing the cylinder 11.

The sleeve 6 is configured to inject a fuel gas into the inlet path 2 on the upstream side position of the inlet port 9 of the inlet path 2.

At the position of the inlet valve 3 shown in FIG. 1(A), the fuel gas injection hole 6a is in a closed state. Thus, a fuel gas supply path 7 and the inlet path 2 are separated from each other by the projection 5 of the inlet valve rod 4.

In FIG. 1(B), the inlet valve 3 is in a fully opened state. Thus, the fuel gas supply path 7 and the inlet path 2 communicate with each other via a gap 8 between the outer circumference of the inlet valve rod 4 and the inner circumference of the sleeve 6, and the fuel gas injection hole 6a of the sleeve 6. As a result, the fuel gas is injected through the fuel gas injection hole 6a into the inlet path 2.

Incidentally, the cylinder head 1 is provided with an outlet valve not shown. The inlet valve 3 and the outlet valve are reciprocally driven so as to open and close the inlet port and the outlet port at a prescribed timing by a rocker arm mechanism not shown mechanically connected to a crank shaft not shown by a timing gear or the like.

The sleeve 6 is disposed so that the bottom end face 6f on the inlet path 2 side does not protrude from the wall surface 2a forming the inlet path 2, and is situated on substantially the same plane.

Then, the bottom end face 6f of the sleeve 6 opens to the inlet path 2 of the cylinder head 1, and the other end thereof communicates with the fuel gas path 7 on the opposite side of the inlet path 2.

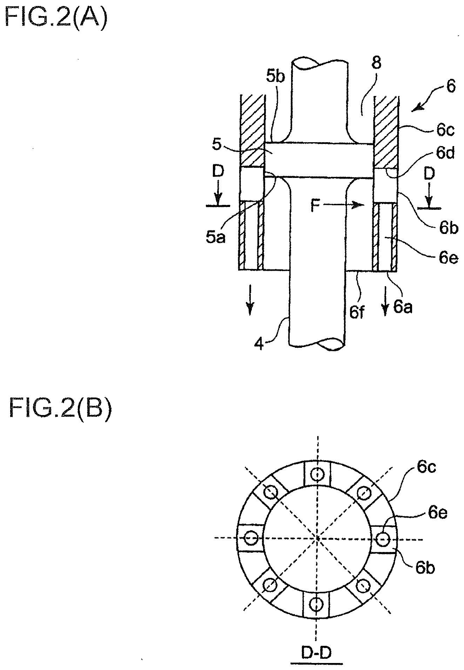

As shown in FIGS. 2 (A) and 2(B), in the peripheral wall part 6c which is the inner circumferential surface forming the hollow cylindrical part of the sleeve 6, there are formed a plurality of suction holes 6b formed in a direction at right angles to the axis of the sleeve 6.

At the thickness (board thickness) part of the peripheral wall part 6c, there is formed an injection path 6e establishing communication between the suction hole 6b and the fuel gas injection hole 6a opened in the bottom end face 6f of the sleeve 6. The injection path 6e is formed in a circular shape in cross section in a direction at right angles to the axial direction of the injection path 6e.

In the present embodiment, as in the cross section along D-D of FIG. 2 (A) shown in FIG. 2(B), the injection paths 6e are disposed at eight sites in the peripheral wall part 6c, but may be increased or decreased according to the intended purpose.

Incidentally, in the present embodiment, the suction hole 6b penetrates the peripheral wall part 6c, but may be in the shape of a concave part closed on the outer circumferential side of the peripheral wall part 6c. It is essential only that the concave part and the injection path 6e communicating with one end of the sleeve 6 communicate with each other, thereby to allow a fuel gas to pass therethrough.

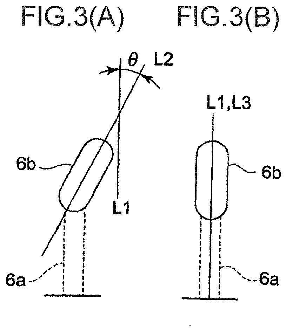

Whereas, in the related art, the shape of the suction hole 6b is, as shown in FIG. 3(B), such that the major axis L3 of 6a is in parallel with the axis L1 of the sleeve 6.

This results in the following: the corner part of the outer edge of the suction hole 6b and the outer circumferential surface of the projection 5 of the inlet valve rod 4 invariably come in sliding contact with each other at the same portion. As a result, wear scars of the portion become more likely to be caused.

In the present embodiment, as shown in FIG. 3(A) which is a view on an arrow F of FIG. 2(A), the major axis L2 of 6a is formed with a tilt angle θ with respect to the axis L1 of the sleeve 6. The sliding contact surface between the corner part of the outer edge of the suction hole 6b and the outer circumferential surface 5a of the projection 5 of the inlet valve rod 4 slides in a contact manner in the circumferential direction (along the θ direction) as the inlet valve rod 4 moves in the direction of the axis L1 of the sleeve 6 because the suction hole 6b along the major axis has a tilt angle of θ. This can prevent the occurrence of wear scars on the outer circumferential surface 5a of the projection 5.

At the inlet valve closing time, as indicated with the operation in FIG. 1 (A), the inlet port 9 is closed by the inlet valve 3, so that the sucked air introduction into the combustion chamber 10 is blocked.

In this case, the projection 5 of the inlet valve rod 4 is situated on the upper side (the fuel gas path 7 side) of the suction hole 6b. Accordingly, the fuel gas is not injected into the inlet path 2.

When the piston is rendered in the suction stroke, by a rocker arm mechanism not shown, the inlet valve 3 is moved in the bottom end edge 6f (the combustion chamber side). Thus, the inlet valve 3 opens the inlet port 9. In addition, when the fuel path side end edge 5b of the projection 5 of the inlet valve rod 4 goes beyond the upper end edge 6d of the suction hole 6b, and moves downward (the bottom end face 6f side of the sleeve 6), the fuel gas in the fuel gas path 7 passes through the gap 8 between the peripheral wall part 6c of the sleeve 6 and the outer diameter φ of the inlet valve rod 4. Thus, injection is started from the fuel gas injection hole 6a into the inlet path 2 through the suction hole 6b via the injection path 6e. Then, the mixed gas of the fuel gas and the sucked air is introduced into the combustion chamber 10.

Such a structure can prevent the bottom end of the sleeve 6 from protruding into the inlet path 2 of the cylinder head 1. For this reason, the circulation resistance against the sucked air is reduced, and the pumping work is reduced, resulting in the improved fuel consumption rate.

Further, as the outer circumferential surface 5a of the cylindrical projection 5 of the inlet valve rod 4 and the inlet valve rod 4 slide along the axis L1 of the sleeve 6, the sliding contact portion with the corner part of the outer edge of the suction hole 6b shifts in the circumferential direction. This can inhibit the occurrence of wear scars on the projection outer circumferential surface.

Further, the injection path 6e is in a circular shape in cross section, and hence is easy to drill. As a result, the manufacturing cost can be suppressed.

### (Second Embodiment)

The present embodiment is the same as the first embodiment except for the shape of a sleeve 15. Accordingly, only the shape of the sleeve 15 will be described, and others will not be described.

Incidentally, the same components are given the same reference numerals and signs, and a description will be omitted.

The sleeve 15 is disposed so that the outer edge of the bottom end face 15f on the inlet path 2 side does not protrude from the wall surface 2a forming the inlet path 2, and is situated on substantially the same plane.

Then, the bottom end face 15f which is the outer edge of the sleeve 15 opens to the inlet path 2 of the cylinder head 1, and the other end thereof communicates with the fuel gas path 7 on the opposite side of the inlet path 2.

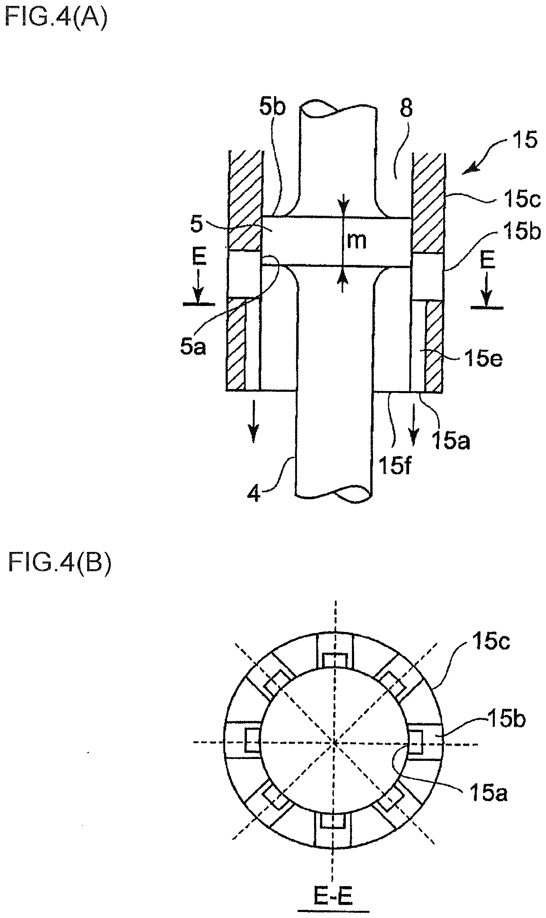

As shown in FIGS. 4(A) and 4(B), in the peripheral wall part 15c which is the inner circumferential surface forming the hollow cylindrical part of the sleeve 15, there are formed a plurality of suction holes 15b formed in a direction at right angles to the axis of the sleeve 15.

In the peripheral wall part 15c, there is formed a groove-like injection path 15e establishing communication between the suction hole 15b and the bottom end face 15f of the sleeve 15. The injection path 15e is a groove in a rectangular shape in cross section opening toward the hollow cylindrical part of the peripheral wall part 15c.

Incidentally, the cross sectional shape of the groove is not limited to the rectangular shape, and may be a semi-circular shape or a V shape.

In the present embodiment, as shown in FIG. 2(B), the injection paths 15e are disposed at eight sites in the peripheral wall part 15c, but may be increased or decreased according to the intended purpose.

Incidentally, in the present embodiment, the suction hole 15b penetrates the peripheral wall part 15c, but may be in the shape of a concave part closed on the outer circumferential side of the peripheral wall part 15c. It is essential only that the concave part and the injection path 15e communicating with one end of the sleeve 15 communicate with each other, thereby to allow a fuel gas to pass therethrough.

With such a configuration, the hollow cylindrical part side of the concave groove-like portion is in an open state, except for the sliding contact part between the injection path 15e and the outer circumferential surface 5a of the projection 5 (the inlet valve rod axial direction length m of the projection 5 (see FIG. 4(a) ) ) during the operation of the inlet valve 3. As a result, the circulation resistance against the fuel gas is reduced, so that the fuel supply amount can be increased.

### INDUSTRIAL APPLICABILITY

The invention is desirably used for a fuel gas supply device of a gas engine in which the injection part of a fuel gas for supplying the fuel gas into the inlet path is prevented from protruding into the inlet path, thereby to reduce the circulation resistance against the sucked air flowing in the inlet path.

### EXPLANATION OF REFERENCE NUMERALS

- 1: Cylinder head
- 2: Inlet path
- 3: Inlet valve
- 4: Inlet valve rod
- 5: Projection
- 6: Sleeve
- 7: Fuel gas path
- 8: Cylindrical hollow part
- 9: Inlet port
- 10: Combustion chamber
- 5a: Outer circumferential surface
- 6a, 15a: Fuel gas injection hole
- 6b, 15b: Suction hole
- 6c, 15c: Peripheral wall part
- 6e, 15e: Injection path

## Claims

1. A gas engine fuel gas supply device for supplying a fuel gas into an inlet path (2) by a vertical movement of an inlet valve rod (4) caused by opening and closing of an inlet valve (3),
the device comprising:
a projection (5) formed at a part in an axial direction of the inlet valve rod (4), and larger in an outer diameter than a vicinity thereof;
a sleeve (6) into which the projection (5) is slidably fitted;
a suction hole (6b) formed in the sleeve (6), and opening in an inner circumferential surface of the sleeve (6); and
a fuel gas injection hole opening;
wherein in response to a downward movement of the projection (5) of the inlet valve rod (4), the suction hole (6b) and the fuel gas injection hole (6a) establish communication between an inside of the sleeve (6) and the inlet path (2)
**characterized in that**
the fuel gas injection hole opening (6a) is in a bottom end face (6f) of the sleeve (6) and the bottom end face (6f) of the sleeve (6) is disposed not to protrude from a wall surface (2a) forming the inlet path (2).

2. The gas engine fuel gas supply device according to claim 1, wherein an injection path (6e) for establishing communication between the suction hole (6b) and the fuel gas injection hole (6a) is a through hole along an axis of the sleeve (6) in a board thickness part forming the inner circumferential surface.

3. The gas engine fuel gas supply device according to claim 2, wherein the through hole of the injection path (6e) is formed in a circular shape.

4. The gas engine fuel gas supply device according to claim 1, wherein an injection path (6e) for establishing communication between the suction hole (6b) and the fuel gas injection hole (6a) is formed in a concave groove shape in a board thickness part forming the inner circumferential surface.

5. The gas engine fuel gas supply device according to claim 1, wherein an opening shape of the suction hole (6b) is an ellipse shape, and a major axis of the ellipse is tilted with respect to an axis of the sleeve (6).

## Patentansprüche

1. Gasmotor-Brenngas-Zuführvorrichtung zum Zuführen eines Brenngases in einen Einlasspfad (2) durch eine vertikale Bewegung einer Einlassventilstange (4), welche durch Öffnen und Schließen eines Einlassventils (3) hervorgerufen wird,
wobei die Vorrichtung umfasst:
einen Vorsprung (5), der an einem Abschnitt in axialer Richtung der Einlassventilstange (4) ausgebildet ist und im Außendurchmesser größer als die Umgebung davon ist;
eine Hülse (6), in welche der Vorsprung (5) verschiebbar gefügt ist;
eine Absaugöffnung (6b), welche in der Hülse (6) ausgebildet ist und sich in eine innere Umfangsfläche der Hülse (6) öffnet; und
eine Brenngaseinspritzlochöffnung,
wobei als Reaktion auf eine Abwärtsbewegung des Vorsprungs (5) der Einlassventilstange (4), die Absaugöffnung (6b) und die Brenngaseinspritzöffnung (6a) eine Verbindung zwischen einer Innenseite der Hülse (6) und des Einlasspfads (2) aufbauen,
**dadurch gekennzeichnet, dass**
sich die Brenngaseinspritzöffnung (6a) in einer Unterseite (6f) der Hülse (6) befindet und die Unterseite (6f) der Hülse (6) so angeordnet ist, dass sie nicht von der Wandoberfläche (2a), die den Einlasspfad (2) bildet, vorsteht.

2. Gasmotor-Brenngas-Versorgungsvorrichtung nach Anspruch 1, wobei ein Einspritzpfad (6e), welcher eine Verbindung zwischen der Absaugöffnung (6b) und der Brenngaseinspritzöffnung (6a) herstellt, ein Durchgangsloch entlang einer Achse der Hülse (6) in einem Plattendickenteil, welches die innere Umfangsfläche bildet, ist.

3. Gasmotor-Brenngas-Versorgungsvorrichtung nach Anspruch 2, wobei das Durchgangsloch des Einspritzpfads (6e) kreisförmig ausgebildet ist.

4. Gasmotor-Brenngas-Versorgungsvorrichtung nach Anspruch 1, wobei der Einspritzpfad (6e), welcher eine Verbindung zwischen der Absaugöffnung (6b) und der Brenngaseinspritzöffnung (6a) herstellt, in einer konkaven Nutform eines Plattendickenteils, welches die innere Umfangsfläche bildet, ausgebildet ist.

5. Gasmotor-Brenngas-Versorgungsvorrichtung nach Anspruch 1, wobei die Öffnungsform der Absaugöffnung (6b) eine Ellipsenform ist, und eine Hauptachse der Ellipse im Bezug zu einer Achse der Hülse (6) geneigt ist.

## Revendications

1. Dispositif d'alimentation en gaz combustible de moteur à gaz pour l'alimentation d'un gaz combustible dans une voie d'admission (2) par un mouvement vertical d'une tige de soupape d'admission (4) provoqué par l'ouverture et la fermeture d'une soupape d'admission (3),
le dispositif comprenant :
une saillie (5) formée au niveau d'une partie dans une direction axiale de la tige de soupape d'admission (4), et d'un diamètre extérieur supérieur à un voisinage de celle-ci ;
un manchon (6) dans lequel la saillie (5) est ajustée de manière coulissante ;
un trou d'aspiration (6b) formé dans le manchon (6), et s'ouvrant dans une surface circonférentielle intérieure du manchon (6) ; et
une ouverture de trou d'injection de gaz combustible ;
dans lequel en réponse à un mouvement vers le bas de la saillie (5) de la tige de soupape d'admission (4), le trou d'aspiration (6b) et le trou d'injection de gaz combustible (6a) établissent une communication entre un intérieur du manchon (6) et la voie d'admission (2)
**caractérisé en ce que**
l'ouverture de trou d'injection de gaz combustible (6a) est dans une face d'extrémité inférieure (6f) du manchon (6) et la face d'extrémité inférieure (6f) du manchon (6) est disposée de façon à ne pas faire saillie d'une surface de paroi (2a) formant la voie d'admission (2).

2. Dispositif d'alimentation en gaz combustible de moteur à gaz selon la revendication 1, dans lequel une voie d'injection (6e) pour l'établissement d'une communication entre le trou d'aspiration (6b) et le trou d'injection de gaz combustible (6a) est un trou traversant le long d'un axe du manchon (6) dans une partie d'épaisseur de plaque formant la surface circonférentielle intérieure.

3. Dispositif d'alimentation en gaz combustible de moteur à gaz selon la revendication 2, dans lequel le trou traversant de la voie d'injection (6e) est réalisé en forme circulaire.

4. Dispositif d'alimentation en gaz combustible de moteur à gaz selon la revendication 1, dans lequel une voie d'injection (6e) pour l'établissement d'une communication entre le trou d'aspiration (6b) et le trou d'injection de gaz combustible (6a) est réalisée en forme de rainure concave dans une partie d'épaisseur de plaque formant la surface circonférentielle intérieure.

5. Dispositif d'alimentation en gaz combustible de moteur à gaz selon la revendication 1, dans lequel une forme d'ouverture du trou d'aspiration (6b) est une forme d'ellipse, et un axe principal de l'ellipse est incliné par rapport à un axe du manchon (6).
